Europäisches Patentamt

European Patent Office

Office européen des brevets

(11) Publication number: **0 129 622**
A1

(12) **EUROPEAN PATENT APPLICATION**

(21) Application number: 83303714.6

(22) Date of filing: 28.06.83

(51) Int. Cl.⁴: **B 01 J 41/04**
**C 02 F 1/42**

(43) Date of publication of application:
02.01.85 Bulletin 85/1

(84) Designated Contracting States:
AT BE CH DE FR GB IT LI LU NL SE

(71) Applicant: **Rohm and Haas Company**
**Independence Mall West**
**Philadelphia, Pennsylvania 19105(US)**

(72) Inventor: **Isacoff, Eric Gilbert**
**9 Juniper Drive**
**Richboro, Pa. 18944(US)**

(72) Inventor: **Neely, James Watson**
**504 Martin Lane**
**Dresher, Pa. 19025(US)**

(74) Representative: **Angell, David Whilton et al,**
**Rohm and Haas Company Patent Department**
**Chesterfield House Bloomsbury Way**
**London WC1A 2TP(GB)**

(54) Trihalomethane precursor removal using ion exchange emulsions.

(57) To avoid formation of toxic trihalomethanes in drinking waters disinfected with halogens these waters are treated with 1 to 25 mg/1 of submicroscopic ion exchange resin particles having an average particle diameter less than 1.5 $\mu$m, optionally in the presence of a metal salt coagulant, to remove the trihalomethane precursors prior to halogenation.

EP 0 129 622 A1

Croydon Printing Company Ltd

TRIHALOMETHANE PRECURSOR REMOVAL USING ION
EXCHANGE EMULSIONS.

This invention is concerned with trihalomethane
precursor removal using ion exchange emulsions.

The ubiquitous use of chlorine as a disinfectant
in public water supplies has introduced a subtle
health hazard of its own. Chlorine has been shown
to react with humic substances present in such waters
to produce trihalomethanes (THM) such as chloroform.
The Environmental Protection Agency has identified
trihalomethanes as carcinogens in animals, and
has published a maximum contaminant level of 0.10
mg/liter (100 ppb) for total THM in community water
systems (National Interim Primary Drinking Water
Regulations; Control of Trihalomethanes in Drinking
Water; Final Rules. U.S. Environmental Protection
Agency, Federal Register, Vol. 44, No. 231,
November 29, 1979).

Attempts at removing trihalomethanes from
chlorinated drinking water have met with but limited
success. If THM is removed, but residual chlorine and
humic substances remain, the THM will re-form. If the
active chlorine is removed, as with granular activated charcoal, the water must be re-chlorinated to meet standards, and THM again may re-form.

An alternative approach is to remove the humic substances that are THM precursors. These substances are found in many natural waters, are probably leached from organic materials found in soil, and are usually found at high concentrations in surface waters, and at lower concentrations in most ground waters. Materials that previously have been used for removing them from water include adsorbents such as granular activated carbon, coagulants such as alum and ferric sulfate, and conventional ion exchange resins, especially weakly basic anion exchange resins. Each of these processes shares the problem that relatively large amounts of treating agents must be added to the drinking water to effectively reduce the THM precursor levels to below permissible limits. In addition, each possesses additional problems of its own, some of which are described above.

Accordingly, an object of the present invention is to minimize the amount of treating agent that must be added to water to significantly reduce its THM precursor content. Another object is to remove THM precursors in a way that does not interfere with conventional drinking water disinfectant processes. Additional objects will become apparent upon consideration of the following disclosure.

We have discovered a process for removing the precursors of trihalomethane from water, and especially from drinking water containing such trihalomethane precursors, which comprises treating the water with submicroscopic ion exchange resin particles having a diameter smaller than about 1.5 $\mu$m. The submicroscopic ion exchange particles may be anion exchange particles alone, or anion exchange particles combined with cation exchange particles in the form of a floc. These submicroscopic ion exchange particles are surprisingly effective in removing THM precursors, and are effective at surprisingly low concentrations. It would have been expected that for effective treatment removal of THM from drinking water as much as 50 milligrams resin per liter of water (mg/l) would be required. However we have unexpectedly found that the preferred level is 1 to 25 mg/l, preferably about 20 mg/l or less, more preferably about 15 mg/l or less, and still more preferably about 10 mg/l or less.

A convenient process by which water such as drinking water may be treated according to the process of the present invention is to introduce the submicroscopic anion exchange resin in the form of an emulsion, or to introduce a water-suspended floc of the anion and cation exchange resins, into the water prior to the settling and filtration treatment normally given to waters during purification for drinking purposes.

It is beneficial to combine coagulant treatment and treatment with the submicroscopic anion exchange resin. Coagulant treatment is a well-known water treatment process; the coagulants used are similarly well known and include soluble polyelectrolytes, which may be cationic, anionic or nonionic polyelectrolytes, including polyacrylic acid and soluble, polymeric quaternary amines. The coagulants may also be metal salts, including the sulfates and chlorides of aluminum, ferrous and ferric iron, magnesium carbonate and aluminum silicates including clays. Other coagulants will be apparent to those skilled in the art.  The coagulant treatment may occur prior to, simultaneous with, or subsequent to treatment with the submicroscopic anion exchange resin; it should preferably occur prior to any filtration step.

In the absence of a coagulant or flocculant that will flocculate any excess submicroscopic cation exchange resin, either present in the water prior to treatment or introduced as described above, the resin may pass through subsequent filters and produce turbidity.  Treatment with a soluble cationic flocculant or submicroscopic cation exchange resin may be necessary to prevent this turbidity.  The conventional settling and filtration step removes the flocculated resin, and with it the THM precursors, from the water.  Chlorination or other disinfectant processes may be applied at any point during the water treatment, but desirably the disinfectant should be introduced subsequent to treatment with, and more desirably subsequent to removal of, the submicroscopic ion exchange resins.  Chlorination prior to treatment with the submicroscopic ion exchange resin allows the THM precursors to react with the chlorine prior to their removal, thus defeating the purpose of the present process, and chlorination prior to removal of the submicroscopic ion exchange resin allows the resin itself to react with the chlorine.  The consequence of the latter reaction is unknown, but inasmuch as it introduces chlorinated organic materials to the drinking water, it is considered undesirable.

The submicroscopic ion exchange particles used in the process of the present invention are those resins having a diameter of 1.5 $\mu$m or smaller, and bearing ion exchange functional groups.  The level of ion exchange functionality surprisingly has only a limited effect on the ability of these particles to remove THM precursors, and resins with as few as about 0.2 functional groups per monomer unit have almost the same effectiveness in THM precursor removal as those with one functional group per monomer unit. The preferred range of functionality of these resins is from about 0.1 to about 1.5 functional groups per monomer unit, a more preferred range is from about 0.2 to about 1.5 functional groups per monomer unit, and a still more preferred range is from about 0.2 to about 0.55 functional groups per monomer unit. Such submicroscopic ion exchange resins may be prepared as taught in U.S. Patent No. 4,200,695.

Resins suitable for use in the present invention include those prepared by functionalizing emulsion copolymers, and those prepared by copolymerizing monomers which include at least one monomer containing anion exchange functional groups, preferably amine functional groups. The latter process produces anion exchange resins directly, without the need for a subsequent functionalization step, although the amine-containing resins are frequently quaternized to convert weakly basic anion exchange resins to strongly basic ones. These processes are known to the skilled practitioner.

The following examples are intended to illustrate the present invention, but not to limit it except as it is limited in the claims. All reagents used are of good commercial quality, and all percentages and other proportions are by weight, unless otherwise indicated.

In the following examples, samples of raw water were treated according to the process of the present invention, and for comparative purposes, according to conventional processes. Raw water was collected from the Delaware River at Philadelphia, Pennsylvania, filtered through a coarse screen, and subsequently filtered through glass wool prior to testing. Raw water was sampled by the U.S. Environmental Protection Agency from the Ohio River at Cincinnati, Ohio, and from the Preston Water Treatment Plant at Hialeah, Florida; these samples were tested as supplied.

The experimental procedure used was similar for each of the following examples. For the small-scale examples the material to be tested was added to 800 ml of the specified test water in a 1000-ml beaker. The submicroscopic ion exchange resins were added as aqueous suspensions containing 6.25% solids, and the other THM-precursor removers were added as dry solids. The water containing the THM-precursor removers to be tested was stirred for 5 minutes at 100 rpm using a Phipps and Bird jar test apparatus, and for an additional 20 minutes at 30 rpm, after which the water was allowed to stand undisturbed while the solids settled. At 30 and 60 minutes during the settling period the turbidity of the water was determined using a Hellige Turbidimeter and APHA Method No. 163b (APHA Standard Methods, 13th edition, 1971); if a sample containing the submicroscopic anion exchange resin still showed turbidity after 60 minutes of settling, a small amount of submicroscopic cation exchange resin was added to flocculate the excess anion exchange resin. Subsequent to the settling period the water samples were filtered using Whatman #1 filter paper.

Several 50-ml samples of the treated, filtered water were chlorinated to different levels of chlorine, using an approximately 4000-6000 ppm stock solution of chlorine gas dissolved in water; these chlorinated samples were allowed to stand in the dark for 24 hours, after which they were analyzed for chlorine spectrophotometrically using APHA Method No. 114g (APHA Standard Methods, 13th edition, 1971), to determine the sample containing a residual chlorine content of 1.0-1.5 ppm chlorine after 24 hours. The sample containing this specified amount of chlorine after 24 hours was treated with 0.25 ml of 0.1N sodium thiosulfate to reduce the free chlorine and prevent further chlorination during analysis. The THM formed during the 24-hour period was determined using a gas-liquid chromatograph with electron-capture detector, direct injection of the aqueous sample, and similar injection of aqueous chloroform standards.

Examples 1-29, the results of which are given in Table 1, illustrate the removal of THM precursors, as evidenced by the reduction in THM following overnight chlorination, by a strongly basic, submicroscopic anion exchange resin of the present invention, in the hydroxyl form. In Examples 1-10 and 23-29 the tested waters were samples of Delaware River water, in Examples 11-16 they were settled Ohio River water, and in Examples 17-22 they were raw waters from the Preston Water Treatment Plant in Hialeah, Florida.

- 8 -    0129622

TABLF 1

| Fxample | Treatment Level (mg/l) | THM Content ($\mu$g/l) | | % THM Feduction |
|---|---|---|---|---|
| | | Treated | Control | |
| 1 | 1 | 66 | 100 | 34.0 |
| 2 | 3 | 54 | 100 | 46.0 |
| 3 | 5 | 44 | 100 | 56.0 |
| 4 | 7 | 32 | 100 | 68.0 |
| 5 | 9 | 25 | 100 | 75.0 |
| 6 | 1 | 124 | 138 | 10.1 |
| 7 | 3 | 70.6 | 138 | 50.7 |
| 8 | 5 | 36.1 | 138 | 73.8 |
| 9 | 7 | 34.9 | 138 | 74.7 |
| 10 | 9 | 30.2 | 138 | 78.1 |
| 11 | 2 | 120 | 148 | 18.9 |
| 12 | 5 | 84 | 148 | 43.2 |
| 13 | 10 | 87 | 148 | 41.2 |
| 14 | 15 | 67 | 148 | 54.7 |
| 15 | 20 | 55 | 148 | 62.8 |
| 16 | 25 | 56 | 148 | 62.1 |
| 17 | 2 | 340 | 600 | 43.3 |
| 18 | 5 | 360 | 600 | 40.0 |
| 19 | 10 | 319 | 600 | 46.8 |
| 20 | 15 | 242 | 600 | 59.7 |
| 21 | 20 | 232 | 600 | 61.3 |
| 22 | 25 | 176 | 600 | 70.7 |
| 23 | 7.8 | 35 | 148 | 76.2 |
| 24 | 15.7 | 25 | 148 | 82.8 |
| 25 | 23.5 | 29 | 148 | 80.4 |
| 26 | 31.3 | 37 | 148 | 75.0 |
| 27 | 39.1 | 20 | 148 | 86.4 |
| 28 | 31.3 | 32 | 87 | 63.6 |
| 29 | 62.5 | 34 | 87 | 63.1 |

Examples 30-34, the results of which are given in Table 2, illustrate the removal of trihalomethane precursors from Delaware River water samples by a strongly basic, submicroscopic ion exchange resin of the present invention, in the chloride form.

TABLE 2

| Example | Treatment Level (mg/l) | THM Content ($\mu$g/l) Treated | Control | % THM Reduction |
|---------|------------------------|-------------------------------|---------|-----------------|
| 30 | 1 | 124 | 136 | 8.8 |
| 31 | 3 | 52.6 | 136 | 61.3 |
| 32 | 5 | 25.1 | 136 | 81.5 |
| 33 | 7 | 23.1 | 136 | 82.8 |
| 34 | 9 | 19.1 | 136 | 85.9 |

Examples 35-39, the results of which are given in Table 3, illustrate the removal of trihalomethane precursors from Delaware River water with a floc of the present invention formed by mixing the strongly basic submicroscopic ion exchange resin of Examples 1-29 with a strongly acidic, submicroscopic ion exchange resin.

## TABLE 3

| Example | Treatment Level (mg/l) | THM Content ($\mu$g/l) | | % THM Reduction |
|---|---|---|---|---|
| | | Treated | Control | |
| 35 | 50 | 72 | 110 | 34.7 |
| 36 | 100 | 64 | 110 | 41.7 |
| 37 | 62.5 | 58 | 87 | 32.8 |
| 38 | 125 | 62 | 87 | 28.4 |
| 39 | 250 | 52 | 87 | 40.5 |

Example 40 illustrates the removal of trihalomethane precursors from Delaware River water with a mixture of 10 mg/l of ferric sulfate (a known coagulant) and 9 mg/l of the strongly basic, submicroscopic ion exchange resin of the present invention. Examples 41-45 illustrate, for comparative purposes, the removal of trihalomethane precursors from Delaware River water by ferric sulfate alone. The results of Examples 40-45 are given in Table 4.

TABLE 4

| Example | Treatment Level (mg/l) | THM Content ($\mu$g/l) | | % THM Reduction |
|---------|------------------------|---------|---------|-----------------|
|         |                        | Treated | Control |                 |
| 40 | 10 + 9 | 16 | 71 | 77.5 |
| 41 | 10 | 65 | 71 | 8.5 |
| 42 | 20 | 48 | 71 | 32.4 |
| 43 | 30 | 36 | 71 | 49.3 |
| 44 | 40 | 31 | 71 | 56.3 |
| 45 | 50 | 26 | 71 | 63.4 |

Examples 46-54, the results of which are given in Table 5, illustrate for comparative purposes the removal of trihalomethane precursors from Delaware River water by conventional treatment with alum, or aluminum sulfate-16 hydrate.

## TABLE 5

| Example | Treatment Level (mg/l) | THM Content ($\mu$g/l) Treated | Control | % THM Reduction |
|---|---|---|---|---|
| 46 | 10 | 36 | 51 | 29 |
| 47 | 15 | 34 | 51 | 33 |
| 48 | 20 | 27 | 51 | 47 |
| 49 | 30 | 25 | 51 | 51 |
| 50 | 40 | 23 | 51 | 55 |
| 51 | 50 | 34 | 87 | 60.9 |
| 52 | 50 | 25 | 148 | 83.2 |
| 53 | 50 | 49 | 110 | 55.1 |
| 54 | 100 | 41 | 110 | 63.1 |

Examples 55 and 56, the results of which are given in Table 6, illustrate for comparative purposes the removal of trihalomethane precursors from Delaware River water by conventional treatment with activated charcoal (Pittsburgh RC Pulverized Grade, obtained from Calgon Corporation).

## TABLE 6

| Example | Treatment Level (mg/l) | THM Content ($\mu$g/l) Treated | Control | % THM Reduction |
|---------|------------------------|--------------------------------|---------|-----------------|
| 55 | 50 | 79 | 110 | 28.5 |
| 56 | 100 | 42 | 110 | 61.9 |

Examples 57-61, the results of which are given in Table 7, illustrate for comparative purposes the removal of trihalomethane precursors from Delaware River water by treatment with soluble cationic polymers (Eetz 1175). These examples are included to compare the effectiveness of low level treatment with the insoluble submicroscopic ion exchange resins of the . present invention with similar ionic, but soluble, materials which have been previously used for removal of anionic materials from water.

## TABLE 7

| Example | Treatment Level (mg/l) | THM Content ($\mu$g/l) Treated | Control | % THM Reduction |
|---------|------------------------|-------------------------------|---------|-----------------|
| 57 | 5 | 168 | 176 | 4.5 |
| 58 | 10 | 122 | 176 | 30.6 |
| 59 | 15 | 91.9 | 176 | 47.7 |
| 60 | 20 | 84.5 | 176 | 51.1 |
| 61 | 25 | 40.4 | 176 | 77.0 |

Using the same procedures above, but using different resins, Examples 62-76 were performed. In the preceding examples and following Examples 62-64, the emulsion resin used was a styrene-based copolymer crosslinked with divinylbenzene, chloromethylated, aminated and quaternized according to the procedures set forth in U.S. Patent 4,200,695. In the rest of the following examples the resins are prepared according to the procedures set forth in the same U.S. patent, but they differ in composition as follows:

The resins used in Examples 65-70 were styrene-based copolymers crosslinked with divinylbenzene and functionalized by copolymerizing a functional-group-bearing monomer with the above monomers. The resin used in Examples 65-67 contained 48% by weight, based on the total weight of the monomers, of dimethylaminoethyl methacrylate, which incorporated an average of approximately 0.38 functional amine groups per monomer unit into the polymer. The resin of Example 68-70 contained 60%, on the basis described above, of dimethylaminoethyl methacrylate, or an average of approximately 0.5 functional amine groups per monomer unit. The resin used in Examples 71-73 was a copolymer of methyl methacrylate crosslinked with divinylbenzene and functionalized subsequent to polymerization with dimethylaminopropyl methacrylate to a level of approximately 0.22 functional groups per monomer unit, based on the original copolymer. The resin used in Examples 74-76 was functionalized by polymerizing 47% by weight, based on the total weight of monomers, of dimethylaminoethyl methacrylate with methyl methacrylate and the crosslinking monomer ethylene glycol dimethacrylate, to produce a resin having an average of approximately 0.41 functional groups per monomer unit.

The tested waters for Examples 62-76 were raw water samples from Daytona Beach, Florida; when chlorinated without treatment, according to the procedure described above, the water used in Examples 62-70 contained 387 $\mu$g/l of trihalomethanes, and that used in Examples 71-76 contained 399 $\mu$g/l of trihalomethanes (i.e., these are the "control" values analogous to those so labeled in Tables 1-7).

- 16 -

Table 8 gives the results of Examples 62-76, which illustrate the effectiveness of resins having relatively low functionality (Examples 65-76) compared with a resin having a functionality about the same as those of Examples 1-61 (Examples 62-64), when used to treat similar water samples.

## TABLE 8

| Example | Treatment Level (mg/l) | Trihalomethane Content of Treated Water ($\mu$g/l) | % THM Reduction |
|---------|------------------------|-------------------------------|-----------------|
| 62 | 5 | 173 | 55.2 |
| 63 | 10 | 149 | 61.5 |
| 64 | 15 | 115 | 70.3 |
| 65 | 5 | 189 | 51.1 |
| 66 | 10 | 166 | 57.1 |
| 67 | 15 | 134 | 65.5 |
| 68 | 5 | 181 | 53.2 |
| 69 | 10 | 155 | 59.9 |
| 70 | 15 | 125 | 67.7 |
| 71 | 5 | 205 | 48.6 |
| 72 | 10 | 181 | 54.6 |
| 73 | 15 | 163 | 59.2 |
| 74 | 5 | 190 | 52.4 |
| 75 | 10 | 165 | 58.6 |
| 76 | 15 | 149 | 62.6 |

Claims:

1.    A process for removing trihalomethane precursors from water containing said precursors which comprises contacting the water, at a rate of from about 1 to about 25 milligrams of resin per liter of water, with submicroscopic emulsion anion exchange resin having an average particle diameter smaller than 1.5 $\mu$m.

2.    A process as claimed in Claim 1 wherein the water is treated with the resin at a rate of 20 milligrams or less of resin per liter of water.

3.    A process as claimed in Claim 1 wherein the water is treated with the resin at a rate of 15 milligrams or less of resin per liter of water.

4.    A process as claimed in Claim 1 wherein the water is treated with the resin at a rate of 10 milligrams or less of resin per liter of water.

5.    A process as claimed in any preceding claim wherein the resin is subsequently removed from the water by filtration.

6.    A process as claimed in Claim 5 wherein removing the resin by filtration is facilitated by adding to the water, prior to filtration, a submicroscopic cation exchange resin having an average particle diameter smaller than 1.5 micrometers.

7.    A process as claimed in any preceding claim wherein the resin is introduced to the water in the form of an aqueous emulsion.

8.    A process as claimed in any of Claims 1 to 6 wherein the resin is introduced to the water in the form of a floc with a submicroscopic cation exchange resin having an average particle diameter smaller than 1.5 micrometers.

9.    A process as claimed in any preceding claim wherein the water is treated with the resin in the presence of a metal salt coagulant.

10.    A process as claimed in Claim 9 wherein the metal salt coagulant comprises a clay and/or ferric sulfate.

11.    A process as claimed in Claims 9 or 10 wherein the metal salt coagulant is present in the water at a level greater than 5 milligrams per liter of water.

12.    A process as claimed in any preceding claim wherein the anion resin is in the hydroxyl form and/or in the halide form.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | CHEMICAL ABSTRACTS, vol. 92, 1980, page 366, no. 64453g, Columbus, Ohio, USA J.J. ROOK et al.: "Removal of trihalomethane precursors from surface waters using weak base resins" & J. AM. WATER WORKS ASSOC. 1979,71(9), 520-524 * Abstract * | 1 | B 01 J 41/04 C 02 F 1/42 |
| Y | NL-A-7 114 045 (AKZO) * Page 6, lines 24-34 * | 1,9-12 | |
| D,Y | US-A-4 200 695 (CHONG) * Column 9, line 59 - column 10, line 9; column 10, line 56 - column 11, line 66 * | 1,5-8 | |
| A | US-A-4 198 296 (DOUMAS) * Column 6, lines 20-30 * | | TECHNICAL FIELDS SEARCHED (Int. Cl. ³) B 01 J C 02 F |
| A | CHEMICAL ABSTRACTS, vol. 99, 1983, page 292, no. 58615q, Columbus, Ohio, USA P.A. CHADIK et al.: "A parametric study of metal coagulants for removing trihalomethane precursors from various natural water" & PROC. - AWWA ANNU. CONF. 1982, (Pt. 1), 619-632 * Abstract * -/- | | |

The present search report has been drawn up for all claims

| Place of search THE HAGUE | Date of completion of the search 24-02-1984 | Examiner WENDLING J.P. |
|---|---|---|

**European Patent Office**

**EUROPEAN SEARCH REPORT**

| DOCUMENTS CONSIDERED TO BE RELEVANT | | | Page 2 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | FR-A-1 544 177 (DIA-PROSIM)<br><br>* Page 2, right-hand column, paragraphs 4,5 *<br><br>----- | | |

TECHNICAL FIELDS SEARCHED (Int. Cl. ³)

The present search report has been drawn up for all claims

| Place of search | Date of completion of the search | Examiner |
|---|---|---|
| THE HAGUE | 24-02-1984 | WENDLING J.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82